# FASCICULE DE BREVET EUROPEEN

(11) **EP 3 987 692 B1**
(45) Date de publication et mention de la délivrance du brevet: **03.07.2024**
(21) Numéro de dépôt: 20727659.3
(22) Date de dépôt: 27.05.2020
(51) Int. Cl.: H04B 10/61, H04B 10/63

(54) **DÉTECTION COHÉRENTE AVEC OSCILLATEUR LOCAL OPTIMISÉ**
KOHÄRENTE DETEKTION MIT OPTIMIERTEM LOKALEN OSZILLATOR
COHERENT DETECTION WITH OPTIMISED LOCAL OSCILLATOR

(30) Priorité: 21.06.2019 FR 1906714; 29.11.2019 FR 1913462
(43) Date de publication de la demande: 27.04.2022
(73) Titulaire: Orange, 92130 Issy-les-Moulineaux (FR)
(72) Inventeur: CHANCLOU, Philippe, 92326 CHÂTILLON CEDEX (FR); SIMON, Gaël, 92326 CHATILLON CEDEX (FR)
(86) Numéro de dépôt international: PCT/EP2020/064704
(87) Numéro de publication internationale: WO 2020/254080

(56) Documents cités:
- EP-A1- 2 026 478
- EP-A2- 0 194 786
- WO-A1-2005/027378
- WO-A1-2015/079400
- WO-A1-2019/117761
- CIARAMELLA ERNESTO: "Polarization-Independent Receivers for Low-Cost Coherent OOK Systems", IEEE PHOTONICS TECHNOLOGY LETTERS, IEEE SERVICE CENTER, PISCATAWAY, NJ, US, vol. 26, no. 6, 1 mars 2014 (2014-03-01), pages 548-551, XP011540387, ISSN: 1041-1135, DOI: 10.1109/LPT.2013.2296943 [extrait le 2014-02-18] cité dans la demande
- SEZER ERK{\I}L{\I}N\C{C} M ET AL: "Comparison of Low Complexity Coherent Receivers for UDWDM-PONs (lambda-to-the-user)", ARXIV.ORG, CORNELL UNIVERSITY LIBRARY, 201 OLIN LIBRARY CORNELL UNIVERSITY ITHACA, NY 14853, 2 novembre 2017 (2017-11-02), XP080834793,

## Description

### 1. Domaine de l'invention

L'invention se situe dans le domaine des télécommunications par fibres optiques, et plus particulièrement celui des récepteurs de signal optique, tels par exemple les terminaux optiques de lignes (OLT) ou les terminaux optiques de réseaux (ONT) utilisés dans les réseaux optique passifs (PON).

### 2. Etat de la technique antérieure

Une des grandes difficultés dans la détection, côté réception, de données véhiculées dans un signal optique, aussi appelé signal utile ("payload signal" en anglais), provient de l'atténuation de ce signal pendant son voyage dans le milieu optique. Une technique utilisée consiste, à l'arrivée du signal, d'une part à multiplier le signal optique par un autre signal optique de fréquence proche (nommé signal d'oscillation). Cette multiplication des signaux optiques n'est effective que si les deux signaux optiques sont sur le même axe de polarisation. Il faut par contre limiter l'effet dû à l'évolution permanente de l'état de polarisation optique du signal optique qui se propage dans la fibre vis-à-vis de l'état de polarisation de l'oscillateur optique, qui, lui, reste statique. Cette technique est appelée détection cohérente optique par la suite.

Le document "Polarization-independent receivers for low-cost coherent OOK systems" de Ernesto Ciaramella, Photonics Technology Letters, Vol 26, No 6, publié le 15 mars 2014, décrit un système apportant une solution. Ce système de communication pour réseau optique comprend: un circuit à ondes lumineuses comprenant des fibres optiques monomodes et multimodes, un coupleur de fibre optique pour former un combineur optique 3×3 avec en entrée et en sortie de la fibre monomode.

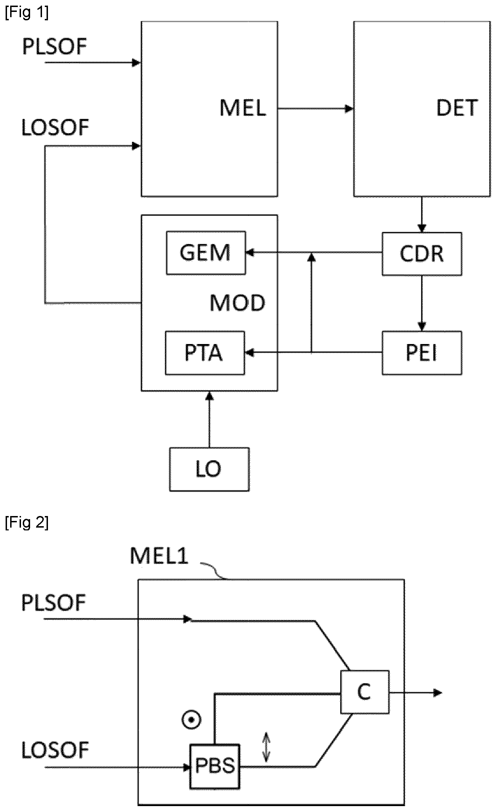

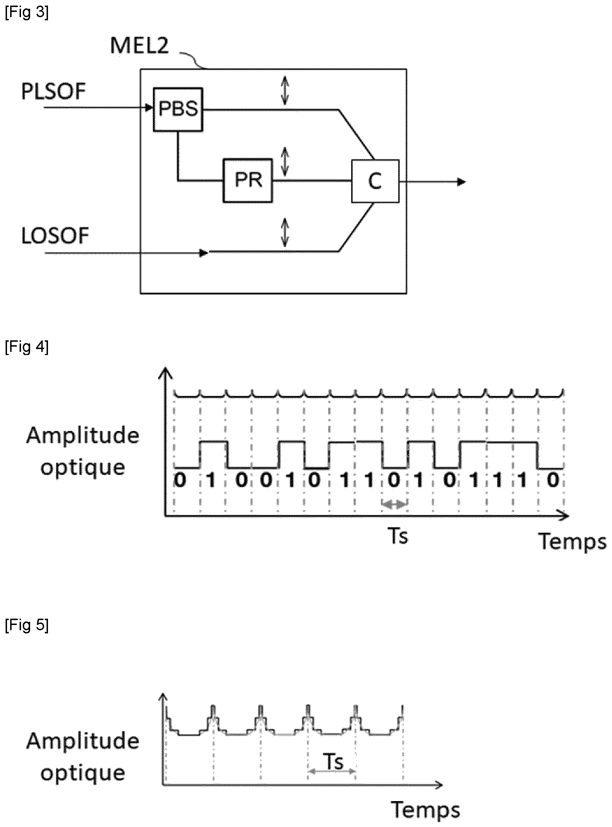

Le principe de fonctionnement de l'état de l'art est basé sur deux mises en oeuvre (respectivement illustrées par les figures 2 et 3) permettant de réaliser une détection cohérente optique qui repose sur le mélange du signal reçu avec une seconde onde optique dite « d'oscillateur local », suivi de la détection par les photo-détecteurs. Cette onde optique (dit aussi signal de battement, ou signal d'oscillation), générée localement au niveau du récepteur, est issue de l'oscillateur local (LO) ainsi appelé par analogie avec le domaine de la radio. L'avantage en termes de sensibilité par rapport à une détection directe du signal sur un photo-détecteur s'explique par le fait que la puissance du signal électrique détecté est multipliée par un facteur dépendant de la puissance optique du signal d'oscillation, tandis que le bruit propre du photo-détecteur reste inchangé. On notera que la communauté optique appelle « mélange » l'ajout au signal reçu du signal issu de l'oscillateur local sur un photo-détecteur.

L'un des problèmes des récepteurs cohérents précédemment décrits, est la nécessité d'un contrôle de la polarisation optique du signal à l'entrée, pour garantir la condition de cohérence entre les deux ondes, signal reçu et signal d'oscillation. En effet, le signal résultant de la multiplication du signal optique avec le signal d'oscillation dépend des polarisations optiques respectives des deux signaux, il peut par exemple s'annuler si elles sont orthogonales. Il faut donc s'assurer d'avoir des signaux (signal reçu et signal d'oscillation) ayant des axes de polarisation parallèles. Compte tenu de la variation aléatoire de l'état de polarisation (SOP - State Of Polarization) du signal dans la fibre, il est nécessaire d'utiliser en réception un montage compatible avec la diversité de polarisation. En pratique, cette opération peut s'effectuer à l'aide d'un cube séparateur de polarisations (PBS). La première variante de mise en oeuvre du mélangeur (MEL1, figure 2) propose de séparer le signal d'oscillation (SLO) arrivant sur la fibre optique LOSOF en deux composantes orthogonales pour réaliser un mélange indépendamment du SOP du signal. Pour la seconde variante de mise en oeuvre du mélangeur (MEL2, figure 3), le principe inverse est utilisé en séparant le signal utile reçu (SPL) sur la fibre optique PLSOF en deux composantes orthogonales (via le séparateur de polarisation PBS) pour réaliser un mélange avec un signal SLO polarisé. Pour que le mélange s'effectue sur la base d'un seul axe de polarisation, un rotateur de polarisation PR fait subir une rotation de 90° à un des axes de polarisation du séparateur PBS. Dans les deux variantes, les trois signaux résultants sont combinés à l'aide du coupleur C, lui-même connecté à un dispositif de détection cohérente.

Cette technique a pour inconvénient de nécessiter un post-traitement électronique, typiquement à l'aide d'un DSP (processeur pour le traitement numérique d'un signal), à la suite de la détection cohérente afin de compenser les déformations du signal reçu.

Un des buts de l'invention est de remédier à ces inconvénients de l'état de la technique.

### 3. Exposé de l'invention

L'invention vient améliorer la situation à l'aide d'un dispositif de détection cohérente de données transportées dans un signal optique dit signal utile entrant, le dispositif comprenant:
- une première fibre optique monomode entrante, injectant le signal utile entrant dans un mélangeur de signaux,
- une deuxième fibre optique monomode entrante, injectant dans le mélangeur de signaux un signal optique de fréquence optique égale, sensiblement égale ou très proche de celle du signal utile entrant, dit signal d'oscillation,
- le mélangeur de signaux où l'un des signaux de la première ou de la deuxième fibre est séparé en deux signaux de polarisations orthogonales, et où l'autre des signaux de la première ou de la deuxième fibre est mélangé aux deux signaux séparés, produisant un signal mélangé,
- un détecteur desdites données transportées, présentes dans le signal mélangé,
- un modulateur d'amplitude configuré pour moduler le signal d'oscillation avant son entrée dans le mélangeur, le motif de modulation comprenant des impulsions répétitives de même intervalle et de même alignement temporel qu'un temps symbole du signal utile entrant

Le mélangeur de signaux permet une détection cohérente des données dans le signal utile entrant, mais des difficultés surviennent en raison des déformations subies par le signal dans son milieu optique ainsi que dans le mélangeur. Il est rappelé que dans un signal optique de données, les données sont codées sur différent paramètres de la porteuse optique pure, c'est-à-dire l'onde optique sans signal. Ces paramètres peuvent être l'amplitude, la phase, la fréquence et la polarisation du signal. Le flux binaire à transporter est découpé en séquences. Ces séquences sont elles-mêmes encodées sous forme de "symboles", chaque symbole étant une combinaison des paramètres précédemment listés, et de durée constante.

Dans le cas le plus simple, celui d'encodage binaire direct, les données du flux binaire à transporter sont codées directement à l'aide d'une succession d'amplitudes basses et d'amplitudes hautes de la lumière, correspondant respectivement à des "0" ou à des "1", appelés bits optiques. Le symbole est dans ce cas équivalent à un bit, et l'expression "temps bit" est parfois utilisée au lieu de "temps symbole".

Dans d'autres cas, 2 bits ou plus sont encodés par symbole. Par exemple une possibilité est d'encoder deux bits par symboles en utilisant la modulation d'amplitude à 4 niveaux. Dans cet encodage appelé PAM-4 (Pulse Amplitude Modulation; il existe également le PAM-8 avec 3 bits par symbole), le flux binaire a transporter est découpé en morceaux de 2 bits : si ces deux bits sont "00", le signal optique aura une amplitude basse ; si ces deux bits sont "11", le signal optique aura une amplitude haute ; si les deux bits sont "01" ou "10" le signal prendra l'une de deux valeurs d'amplitude intermédiaires entre l'amplitude haute et l'amplitude basse.

Une autre possibilité est aussi d'encoder les bits sur plusieurs niveaux d'amplitudes, comme pour le PAM-4 ou le binaire naturel, mais en décalant la phase de la porteuse par rapport aux autres symboles ou par rapport à une référence : on parle alors de QAM (Quadrature Amplitude Modulation). Il existe de nombreux autres formats de modulations auquel l'invention ici décrite s'applique, tels que OOK (NRZ, RZ, Miller, Manchester, ...) .PAM-n, n-QAM, etc.

Il est rappelé également qu'un signal optique d'oscillation selon la technique antérieure présente une amplitude optique continue. Grâce au modulateur d'amplitude appliqué au signal optique d'oscillation, les déformations subies par le signal sont compensées par une accentuation des fronts montants et descendants des symboles optiques dans le signal. La frontière entre les symboles optiques est de ce fait plus marquée, et le dispositif de détection cohérente commet moins d'erreurs de détection.

Selon un aspect du dispositif de détection cohérente, la valeur du temps symbole du signal utile est fournie par un récupérateur d'horloge connecté au détecteur.

Ainsi, la fréquence du motif d'oscillation correspond en temps réel à la fréquence réelle des symboles du signal, au fur et à mesure de la détection des symboles. La valeur fournie par le récupérateur d'horloge peut être la fréquence des symboles, et non la valeur de l'intervalle entre symboles. Dans ce cas il est aisé de déduire cette dernière de la première.

La récupération d'un signal d'horloge se fait généralement en même temps que la récupération des données, et est connue sous l'acronyme anglais "CDR" (Clock and Data Recovery). Un module CDR contient un circuit de récupération d'horloge et un circuit de décision. L'extraction et le traitement du signal d'horloge sont effectués à partir du signal reçu. Le circuit de récupération d'horloge se situe donc en aval de la réception optoélectronique.

Un module CDR comporte deux principales fonctions : l'extraction de la fréquence du signal et l'alignement sur la même phase temporelle. Le processus d'extraction consiste à obtenir un signal d'horloge de même fréquence que celle des données issues de la photo-détection. L'alignement en temps consiste à ajuster la phase d'horloge de sorte que le signal de données soit échantillonné à l'instant optimum par le circuit de décision.

Selon un aspect du dispositif de détection cohérente, l'alignement de la phase temporelle entre le motif du signal d'oscillation et le signal utile entrant est réglé par un circuit de récupération d'horloge et de phase comprenant les éléments suivants:
- le récupérateur d'horloge, connecté au détecteur, configuré pour calculer une valeur du temps symbole du signal utile en fonction des données détectées,
- un calculateur de performance configuré pour calculer un taux de performance du signal détecté, à partir des données détectées,
- un générateur de motif, connecté au récupérateur d'horloge, configuré pour générer un motif de modulation du signal d'oscillation à partir de la valeur du temps symbole du signal utile,
- un aligneur de phase temporelle connecté au calculateur et au générateur de motif, configuré pour déterminer un alignement du motif de modulation dans le temps maximisant le taux de performance du signal détecté.

L'alignement du motif de modulation avec le signal utile n'est pas forcément le même que celui utilisé par le récupérateur d'horloge pour extraire les données du signal utile, même si la fréquence est la même. Grâce au circuit de récupération d'horloge et de phase décrit ci-dessus, un alignement optimal sera déterminé pour le motif de modulation en fonction d'un critère de performance. Ce critère de performance est impacté par l'alignement.

Selon un aspect du dispositif de détection cohérente, les symboles sont codés sur 1 bit et le taux de performance calculé par le calculateur de performance (PEI) est fonction d'un taux d'erreur bit.

L'alignement du motif de modulation est déterminé comme étant satisfaisant lorsque le taux d'erreur bit est inférieur ou égal à un seuil. Ce seuil est un taux d'erreur binaire, par exemple 10⁻¹², au-delà duquel une dégradation de la qualité du service porté par les données utiles du signal optique n'est plus perceptible. D'autres valeurs pour le seuil sont envisageables. Pour un réseau G-PON par exemple, le taux d'erreur maximum autorisé par la norme est de 10⁻¹⁰. Pour un réseau XGS-PON, il est de10⁻³ avant application d'un code correcteur d'erreur et de 10⁻¹² après.

Selon un aspect du dispositif de détection cohérente, les symboles sont codés sur 2 bits ou plus, et le taux de performance calculé par le calculateur de performance est une valeur représentative d'une qualité d'une constellation des symboles dans le signal détecté.

Selon un aspect du dispositif de détection cohérente, les symboles sont codés sur 2 bits ou plus, et le taux de performance calculé par le calculateur de performance est une valeur représentative d'une qualité d'un diagramme de l'œil produit à partir du signal détecté.

Selon un aspect du dispositif de détection cohérente, le taux de performance calculé par le calculateur de performance est une valeur représentative d'un rapport signal à bruit dans le signal détecté.

Selon un aspect du dispositif de détection cohérente, l'aligneur de phase temporelle comprend un filtre à réponse impulsionnelle finie.

Selon un aspect du dispositif de détection cohérente, un seul coefficient de pondération du filtre à réponse impulsionnelle finie est non nul.

Selon un aspect du dispositif de détection cohérente, le générateur de motif est connecté au calculateur de performance, et sélectionne pour le motif de modulation une forme d'impulsion maximisant le taux de performance.

Ainsi, non seulement le motif de modulation est aligné de façon optimale, mais le type de motif utilisé est également optimal pour la détection des données transportées par le signal utile entrant.

Selon un aspect du dispositif de détection cohérente, les impulsions répétitives du motif de modulation ont une forme de pic à proximité de la limite entre chaque temps symbole du signal utile.

Selon un aspect du dispositif de détection cohérente, les impulsions répétitives du motif de modulation ont une forme de creux à proximité de la limite entre chaque temps symbole du signal utile.

Grâce à cet aspect, les niveaux optiques du signal entrant qui correspondent aux 1 ou aux 0 sont davantage discriminés. Les types de formes d'impulsion possibles sont un pic, un creux, ou une combinaison de pic de de creux.

Les différents aspects du dispositif de détection cohérente qui viennent d'être décrits pour ce premier mode de réalisation peuvent être mis en oeuvre indépendamment les uns des autres ou en combinaison les uns avec les autres.

L'invention concerne encore un procédé de détection cohérente de données transportées dans un signal optique dit signal utile entrant, comprenant:
- moduler un signal optique de fréquence optique sensiblement égale à celle du signal utile entrant, dit signal d'oscillation, avec un motif de modulation comprenant des impulsions répétitives de même intervalle et de même alignement temporel que le temps symbole du signal utile entrant
- mélanger le signal utile entrant et le signal d'oscillation modulé, l'un des deux signaux étant séparé en deux signaux de polarisations orthogonales, et où l'autre des deux signaux est mélangé aux deux signaux séparés, produisant un signal mélangé,
- détecter lesdites données transportées dans le signal mélangé, à l'aide d'un détecteur. Selon un de ses aspects le procédé de détection cohérente comprend en outre:
- récupérer une valeur du temps symbole du signal utile en fonction des données détectées, à l'aide d'un récupérateur d'horloge connecté au détecteur.
- calculer un taux de performance du signal détecté, à partir des données détectées,
- déterminer un alignement de phase temporelle du motif de modulation maximisant le taux de peformance.

Selon un de ses aspects le procédé de détection cohérente comprend en outre:
- comparer le taux de performance à un premier seuil, et si le premier seuil n'est pas atteint, modifier l'alignement de phase temporelle du motif de modulation en le décalant dans un sens ou dans l'autre.

L'ampleur du décalage, qui peut être fait alternativement dans chaque sens, peut décroitre au fur et à mesure de la recherche de l'alignement optimal.

Selon un aspect du procédé de détection cohérente, modifier l'alignement de phase temporelle du motif de modulation consiste à changer l'unique coefficient de pondération non nul dans un filtre à réponse impulsionnelle finie appliqué au signal d'oscillation.

Selon un de ses aspects le procédé de détection cohérente comprend en outre:
- comparer le taux de performance à un second seuil, et si le second seuil n'est pas atteint, modifier le motif de modulation du signal d'oscillation.

Ce procédé est destiné à être mis en oeuvre dans tous les modes de réalisation du dispositif de détection cohérente qui vient d'être décrit.

Dans un premier mode de réalisation du dispositif de détection cohérente, chaque symbole est codé sur un bit et le temps symbole est équivalent au temps bit.

Dans un second mode de réalisation du dispositif de détection cohérente, chaque symbole est codé sur deux bits ou plus, et l'expression utilisée est "temps symbole".

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
[Fig 1] La figure 1 présente de façon schématique un exemple de dispositif de détection cohérente de données dans un signal optique reçu sur une fibre optique monomode, selon un aspect de l'invention,
[Fig 2] La figure 2 présente de façon schématique un premier exemple de mélangeur de signaux pour un dispositif de détection cohérente de données dans un signal optique reçu sur une fibre optique monomode, selon la technique antérieure,
[Fig 3] La figure 3 présente de façon schématique un second exemple de mélangeur de signaux pour un dispositif de détection cohérente de données dans un signal optique reçu sur une fibre optique monomode, selon la technique antérieure,
[Fig 4] La figure 4 présente de façon schématique un exemple de motif de modulation du signal d'oscillation,
[Fig 5] La figure 5 présente un premier exemple de forme pour le motif de modulation du signal d'oscillation,
[Fig 6] La figure 6 présente un second exemple de forme pour le motif de modulation du signal d'oscillation,
[Fig 7] La figure 7 présente une vue schématique d'un signal déformé avant modulation du signal d'oscillation,
[Fig 8] La figure 8 présente une vue schématique d'un signal amélioré après modulation du signal d'oscillation,
[Fig 9] La figure 9 présente de façon schématique un exemple de procédé de détection cohérente de données dans un signal optique reçu sur une fibre optique monomode, selon un aspect de l'invention.

### 5. Description détaillée d'au moins un mode de réalisation de l'invention

Le principe de fonctionnement d'un mélangeur de signaux de l'état de l'art, pour un dispositif de détection cohérente de données dans un signal optique reçu sur une fibre optique monomode a été présenté ci-dessus, en relation avec les figures 2 et 3 qui ne seront pas décrites à nouveau.

La figure 1 présente de façon schématique un exemple de dispositif de détection cohérente de données dans un signal optique reçu sur une fibre optique monomode, selon un aspect de l'invention.

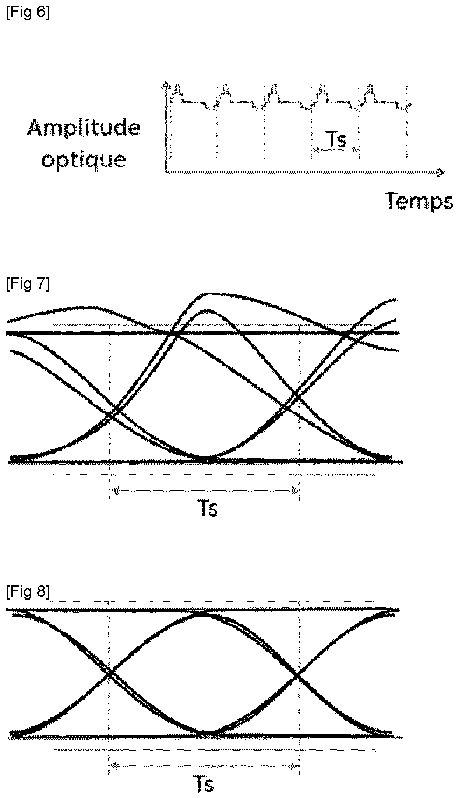

L'invention propose de moduler un oscillateur local LO afin de corriger la déformation du signal reçu. Un oscillateur local optique, dans l'état de l'art, a une amplitude optique continue dans le temps. Selon l'invention, un modulateur MOD module la source optique de l'oscillateur local LO, qui peut lui-même être compris ou non dans le dispositif de détection selon l'invention, en utilisant un motif de modulation répétitif à la fréquence du temps symbole du signal, noté Ts, tel que par exemple le motif illustré par la figure 4. Ce motif de modulation répétitif peut être analogique ou numérique avec différentes caractéristiques de forme et d'amplitude comme présentées en figures 5 et 6. Le motif de la figure 5 comporte un pic à la frontière du temps symbole, tandis que le motif de la figure 6 comporte un creux immédiatement avant le temps symbole, suivi d'un pic immédiatement après.

L'objectif de ce motif répétitif de modulation est de corriger les déformations du signal comme par exemple celui représenté par le diagramme de l'œil de la figure 7 pour s'approcher de celui de la figure 8.

Ce motif répétitif de modulation de l'oscillateur local doit être de la même fréquence que le temps symbole du signal. Ce motif doit aussi être aligné dans le temps de manière à ce que le début du motif corresponde au début d'un symbole du signal.

Le récupérateur CDR d'horloge, et le calculateur de performance PEI du signal détecté permettent de récupérer le temps symbole du signal, Ts, ainsi que la phase temporelle du signal, pour paramétrer le motif répétitif de modulation.

La procédure de récupération des signaux d'horloge et des données est connue sous l'acronyme anglais "CDR" (de l'anglais Clock and Data Recovery). Le récupérateur CDR contient un circuit de récupération d'horloge et un circuit de décision. L'extraction et le traitement du signal d'horloge sont effectués à partir du signal reçu. Le circuit de récupération d'horloge se situe après le détecteur DET optoélectronique et comporte deux fonctions principales: l'extraction de la fréquence du signal et l'alignement sur la même phase temporelle. Le processus d'extraction consiste à obtenir un signal d'horloge de même fréquence que celle des données issues de la photo-détection effectuée par le détecteur DET. L'alignement en temps consiste à ajuster la phase d'horloge de sorte que le signal de données soit échantillonné à l'instant optimum par le circuit de décision.

Plusieurs architectures du circuit de récupération d'horloge ont été proposées dans différentes technologies et pour divers domaines d'applications. Dans la plupart des cas, ce sont des circuits utilisant le principe de boucle à verrouillage de phase ou PLL (Phase-Locked Loop). La PLL permet, à la fois, d'extraire la fréquence et de synchroniser la phase grâce à une boucle d'asservissement. De la sorte, un oscillateur local à fréquence variable génère un signal d'horloge dont la phase est "verrouillée" avec celle des données d'entrée.

Selon l'invention, afin d'obtenir un résultat optimal le motif répétitif de modulation électro-optique de l'oscillateur optique local doit être de la même fréquence que le temps symbole du signal, et aussi être en phase temporelle avec le temps symbole du signal. Pour cela un bloc PTA (de l'anglais Phase Time Alignment) permet d'optimiser la phase temporelle du motif par rapport au signal optique reçu selon un critère de performance.

Une façon de réaliser le bloc PTA est à l'aide d'un filtre à réponse impulsionnelle finie qui permet de contrôler le déphasage relatif entre le signal utile et le signal d'oscillation. Dans un filtre à réponse impulsionnelle finie, le signal électrique d'entrée est échantillonné à une période T fixe. Chaque échantillon est pondéré et additionné avec les échantillons pondérés des instants adjacents, ces derniers étant retardés d'un nombre entier relatif de périodes T par rapport au signal entrant. Il est ainsi possible de créer une réponse impulsionnelle sur mesure, dans les limites de la mémoire de l'équipement, c'est-à-dire le nombre maximum d'échantillons mémorisables, de la période T d'échantillonnage, et de la précision des coefficients de pondération. Ces coefficients influent sur l'alignement temporel du signal produit et doivent être choisis pour maximiser un indicateur de performance. Ce critère de performance est fourni par le bloc PEI.

Lorsque tous les coefficients de la réponse impulsionnelle sont nuls sauf un, le retard appliqué par le filtre au signal entrant est un multiple de la période d'échantillonnage T. Il est donc possible grâce à cet aspect de retarder le signal entrant de zéro, une fois T, deux fois T, et ainsi de suite jusqu'à (N-1)*T, où N est le nombre de coefficients du filtre. Si le seul coefficient non nul est celui n'appliquant pas de retard par rapport au signal entrant dans le filtre avant d'être envoyé au montage additionneur des signaux utile et d'oscillation, alors le signal de sortie est le même que celui de l'entrée, sans retard. En effet l'additionneur ne reçoit pas d'autre signal : la réponse impulsionnelle est un pseudo-Dirac, ce qui se traduit par une absence de filtrage. Si le seul coefficient non nul est celui appliquant un retard égal à une période T par rapport au signal entrant avant d'être envoyé au montage additionneur, alors le signal d'oscillation en sortie de filtre est le même que celui de l'entrée, mais retardé d'une durée T. Et ainsi de suite, ce qui permet d'obtenir une ligne à retard programmable.

Par exemple, un filtre à réponse impulsionnelle finie de 9 coefficients et d'une période d'échantillonnage T égale à 18 ps donne un choix entre 9 retards régulièrement espacés entre 0 et 144 ms (8 fois 18 ps). Un tel filtre convient pour un temps symbole Ts de 144 ps maximum.

Dans un premier mode de réalisation, le symbole est égal à un bit, et peut donc prendre l'une des deux valeurs 0 ou 1. Le calculateur de performance PEI peut dans ce cas se baser sur le taux d'erreur bit BER (pour Bit Error Rate, en anglais).

Ce motif répétitif de modulation de l'oscillateur local est généré par le bloc GEM, qui peut le modifier pour optimiser l'égalisation du signal. Deux exemples de motifs sont illustrés par les figures 5 et 6, mais d'autres motifs sont envisageables, en combinant de différentes manières pics et creux à proximité de la frontière d'un temps symbole, et en utilisant différentes amplitudes de pic et/ou de creux. Pour optimiser l'égalisation du signal, il est aussi possible de comparer une ou plusieurs séquences de symboles d'apprentissage avec les données récupérées en sortie du détecteur DET, en faisant varier le motif répétitif.

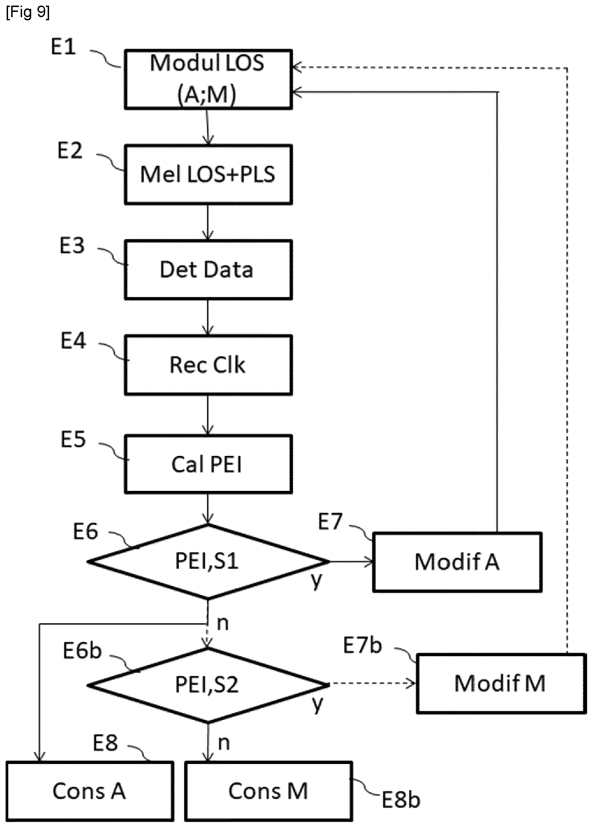

La figure 9 présente de façon schématique un exemple de procédé de détection cohérente de données dans un signal optique reçu sur une fibre optique monomode, selon un aspect de l'invention.

Lors d'une étape E1, le signal optique d'oscillation LOS est modulé avec un motif M et un alignement A de phase temporelle.

Lors d'une étape E2, le signal d'oscillation modulé, transporté par la fibre optique LOSOF, et le signal optique de données utiles PLS transporté par la fibre optique PLSOF, sont mélangés, à l'aide d'un mélangeur tel que ceux décrits en relation avec les figures 2 et 3.

Lors d'une étape E3, le ou les signaux résultants du mélange sont projetés par exemple vers une ou plusieurs photodiodes, qui détectent les données utiles transportées dans le signal PLS.

Lors d'une étape E4, l'horloge du signal PLS est récupérée, par exemple de la façon décrite précédemment. Par récupération d'horloge, il faut entendre récupérer à la fois la valeur du temps symbole et l'alignement de la phase temporelle entre les symboles dans le signal PLS et cette horloge.

Lors d'une étape E5, un taux d'erreur bit est calculé à partir de l'horloge récupérée. Ce taux d'erreur peut être calculé à partir de séquences de symboles connus ou à partir d'un compteur d'erreur inclus dans une technique de codage basé sur la redondance, aussi nommé code correcteur d'erreur.

Lors d'une étape E6, le taux d'erreur bit est comparé à un seuil S1, par exemple 10⁻¹². S'il est inférieur au seuil S1, cela signifie que l'alignement A est satisfaisant et peut être conservé (étape E8). Il est toutefois avantageux de répéter le test de l'étape E6, au cas où les signaux PLS et/ou LOS dérivent dans le temps.

S'il est supérieur ou égal au seuil S1, l'alignement A est modifié lors d'une étape E7. Le procédé revient alors à l'étape E1, avec l'alignement A modifié. On comprend que le procédé se stabilise lorsqu'une valeur de l'alignement A est trouvée qui résulte en un taux d'erreur bit inférieur au seuil S1.

Il est possible d'utiliser la forme du motif M de modulation comme variable d'ajustement, à la place ou en plus de l'alignement A de la phase temporelle du motif répétitif de modulation du signal d'oscillation.

Dans une première variante de ce mode de réalisation, même si le taux d'erreur bit est inférieur au seuil S1, il est aussi comparé à un deuxième seuil S2, inférieur à S1, lors d'une étape E6b.

S'il est inférieur au seuil S2, cela signifie que le motif M est satisfaisant et peut être conservé (étape E8b). Il est toutefois avantageux de répéter le test de l'étape E6b, au cas où les signaux PLS et/ou LOS dérivent dans le temps.

S'il est supérieur ou égal au seuil S2, le motif M est modifié lors d'une étape E7b. Une sélection parmi plusieurs formes de motif est faite, par exemple parmi les formes illustrées par les figures 5 et 6. Le procédé revient alors à l'étape E1, avec le motif M modifié. On comprend que le procédé se stabilise lorsqu'une forme pour le motif M est trouvée qui résulte en un taux d'erreur bit inférieur au seuil S2.

Dans cette première variante, la variable principale d'ajustement est l'alignement A, mais la forme du motif M est une variable d'ajustement supplémentaire permettant d'améliorer davantage le taux d'erreur bit.

Dans une seconde variante de ce mode de réalisation, seul le test de l'étape E6b est effectué, suivi des étapes E7b ou E8b. La seule variable d'ajustement est alors la forme du motif répétitif de modulation du signal d'oscillation.

Dans une troisième variante de ce mode de réalisation, le test du seuil S2 associé au motif M est effectué avant celui du seuil S1 associé à l'alignement A (l'ordre des étapes E6 et E6b est inversé), et c'est le seuil S1 qui est inférieur au seuil S2. La variable principale d'ajustement est alors la forme du motif M, mais l'alignement A est également une variable d'ajustement permettant d'améliorer davantage le taux d'erreur bit.

Dans une quatrième variante de ce mode de réalisation, les étapes E6 et E6b sont effectuées en parallèle, et le seuil S1 peut être inférieur, égal ou supérieur au seuil S2. L'alignement A et la forme du motif M sont alors des variables indépendantes d'ajustement permettant d'améliorer le taux d'erreur bit.

Dans un second mode de réalisation de l'invention, chaque symbole peut être codé sur deux bits ou plus.

Il est rappelé que selon l'invention, afin d'obtenir un résultat optimal, le motif répétitif de modulation électro-optique de l'oscillateur optique local doit être de la même période que le temps symbole du signal, et être en phase temporelle avec le temps symbole du signal. Pour cela, le bloc PTA permet d'optimiser la phase temporelle du motif par rapport au signal optique reçu selon un critère de performance qui peut ne pas être basé sur le taux d'erreur binaire BER, mais un critère de performance différent, fourni par le bloc PEI.

En effet, lorsque les symboles du signal utile sont codés sur plus d'un bit chacun, le taux d'erreur bit n'est plus un indicateur de performance approprié. Plusieurs indicateurs sont possibles, tels que:
- une valeur représentative d'une qualité d'une constellation des symboles dans le signal détecté, mesurée par exemple par un analyseur de signaux. Ce mode de réalisation du PEI est particulièrement adapté lorsque les données sont codées par la phase du symbole en plus de son amplitude, dans le cas de la modulation QAM (Quadrature Amplitude Modulation) notamment. L'analyseur de signaux échantillonne le signal analogique pour en extraire les informations de phase et d'amplitude des symboles. Il est également capable de donner une indication sur la qualité du signal en estimant l'écart de phase et d'amplitude par rapport à des valeurs de phase et d'amplitude attendues pour le symbole en question. Cette mesure ne nécessite pas l'envoi d'une séquence de symboles connus à l'avance ;
- une valeur représentative d'une qualité d'un diagramme de l'œil (dont des exemples sont illustrés par les figures 7 et 8) produit à partir du signal détecté, mesurée par exemple par un oscilloscope. Pour réaliser le diagramme de l'œil, l'oscilloscope va superposer la trace temporelle des symboles transmis. Cette superposition va mettre en évidence les distorsions subies par le signal : bruit d'intensité, gigue, distorsions de fronts montants et descendants, etc. Un oeil ouvert sera le signe d'un signal de bonne qualité. Ce mode de réalisation ne donne pas d'information sur la phase du signal, seulement sur son amplitude : il peut être utilisé pour tous les types de modulation utilisant une modulation d'amplitude seule, ou une modulation d'amplitude et de phase, QAM par exemple. Cependant dans ce dernier cas l'information sur la dégradation de la phase ne pourra pas être extraite ;
- une valeur représentative d'une qualité du rapport signal à bruit mesurée sur une plage de temps à partir du signal détecté, mesurée par exemple par un analyseur de signaux. La qualité du rapport signal à bruit sera générique au signal sur le temps de la mesure, et ne discriminera pas les différents symboles, contrairement à la valeur de la qualité d'une constellation de symboles.

En référence à la figure 9, le second mode de réalisation de l'invention impacte certaines étapes du procédé proposé.

Dans ce second mode l'indicateur de performance utilisé comme exemple est le diagramme de l'œil mais d'autres sont possibles.

Lors d'une étape E5 modifiée, la qualité d'un diagramme de l'œil est calculée par le bloc PEI, à partir de l'horloge récupérée.

Lors d'une étape E6 modifiée, la qualité d'un diagramme de l'œil est comparée à un seuil S1 propre à l'indicateur utilisé, ici le diagramme de l'oeil. Des méthodes de comparaison utilisant des seuils, applicables au diagramme de l'œil, sont connues de l'homme de métier et ne sont pas explicitées ici.

Si elle est supérieure ou égale au seuil S1, cela signifie que l'alignement A est satisfaisant et peut être conservé (étape E8). Il est toutefois avantageux de répéter le test de l'étape E6, au cas où les signaux PLS et/ou LOS dérivent dans le temps.

Si elle est inférieure au seuil S1, l'alignement A est modifié lors de l'étape E7, par exemple en changeant de coefficient non nul dans le filtre à réponse impulsionnelle finie du bloc PTA.

Le procédé revient alors à l'étape E1, avec l'alignement A modifié. On comprend que le procédé se stabilise lorsqu'un coefficient non nul du filtre à réponse impulsionnelle finie est trouvé qui résulte en une qualité d'un diagramme de l'œil supérieure au seuil S1. Dans des variantes de ce mode de réalisation similaires à celles présentées en relation avec le premier mode de réalisation, une variable d'ajustement additionnelle est la forme du motif M utilisé pour moduler le signal d'oscillation. Lors d'une étape E6b modifiée, la qualité d'un diagramme de l'œil calculée lors de l'étape E5 est aussi comparée à un autre seuil S2 pouvant être différent de S1, pour déterminer si la forme du motif M est satisfaisante ou doit être changée.

Dans un troisième mode de réalisation de l'invention, les deux premiers modes qui viennent d'être présentés sont exécutés l'un à la suite de l'autre. En effet, lorsque le symbole est codé sur plusieurs bits, un résultat encore supérieur est possible en combinant les premier et second modes de réalisation de l'invention. Dans un premier temps, une détection cohérente par symbole est réalisée, selon le second mode de réalisation, par exemple pour détecter le préambule de chaque paquet de données. Ensuite dans un deuxième temps, la détection cohérente est affinée par bit selon le premier mode de réalisation.

Les exemples de réalisation de l'invention qui viennent d'être présentés ne sont que quelques-uns des modes de réalisation envisageables. Ils montrent que l'invention permet d'améliorer la détection cohérente de données dans un signal optique, à l'aide d'un signal d'oscillation à impulsions réglables en forme et en alignement de phase temporelle.

## Revendications

1. **Dispositif de détection cohérente** de données transportées dans un signal optique dit signal utile entrant, le dispositif comprenant:
- une première fibre optique monomode entrante (PLSOF), configurée pour injecter dans un mélangeur de signaux (MEL) le signal utile entrant,
- une deuxième fibre optique monomode (LOSOF) entrante, configurée pour injecter dans le mélangeur de signaux (MEL) un signal optique de fréquence optique sensiblement égale à celle du signal utile entrant, dit signal d'oscillation,
- le mélangeur (MEL) de signaux, configuré pour séparer l'un des signaux de la première ou de la deuxième fibre en deux signaux de polarisations orthogonales, et pour mélanger l'autre des signaux de la première ou de la deuxième fibre aux deux signaux séparés, produisant un signal mélangé,
- un détecteur (DET) desdites données transportées, présentes dans le signal mélangé, le dispositif étant **caractérisé en ce qu'**il comprend en outre :
- un modulateur d'amplitude (MOD) configuré pour moduler le signal d'oscillation avant son entrée dans le mélangeur, le motif de modulation comprenant des impulsions répétitives de même intervalle et de même alignement temporel qu'un temps symbole du signal utile entrant.

2. **Dispositif** de détection cohérente selon la revendication 1, comprenant en outre un récupérateur d'horloge (CDR) connecté au détecteur, configuré pour fournir la valeur du temps symbole du signal utile en fonction des données détectées.

3. **Dispositif** de détection cohérente selon la revendication 2, comprenant en outre
- un calculateur de performance (PEI) configuré pour calculer un taux de performance du signal détecté, à partir des données détectées,
- un générateur de motif (GEM), connecté au récupérateur d'horloge, configuré pour générer un motif de modulation du signal d'oscillation à partir de la valeur du temps symbole du signal utile,
- un aligneur de phase temporelle (PTA) connecté au calculateur (PEI) et au générateur de motif (GEM), configuré pour déterminer un alignement du motif de modulation dans le temps maximisant le taux de performance du signal détecté.

4. **Dispositif** de détection cohérente selon la revendication 3, où les symboles sont codés sur 1 bit et où le taux de performance calculé par le calculateur de performance (PEI) est fonction d'un taux d'erreur bit.

5. **Dispositif** de détection cohérente selon la revendication 3, où les symboles sont codés sur 2 bits ou plus, et où le taux de performance calculé par le calculateur de performance (PEI) est une valeur représentative d'une qualité d'une constellation des symboles dans le signal détecté.

6. **Dispositif** de détection cohérente selon la revendication 3, où les symboles sont codés sur 2 bits ou plus, et où le taux de performance calculé par le calculateur de performance (PEI) est une valeur représentative d'une qualité d'un diagramme de l'œil produit à partir du signal détecté.

7. **Dispositif** de détection cohérente selon la revendication 3, où le taux de performance calculé par le calculateur de performance (PEI) est une valeur représentative d'un rapport signal à bruit dans le signal détecté.

8. **Dispositif** de détection cohérente selon l'une des revendications 3 à 7, où l'aligneur de phase temporelle (PTA) comprend un filtre à réponse impulsionnelle finie.

9. **Dispositif** de détection cohérente selon la revendication 8, où un seul coefficient de pondération du filtre à réponse impulsionnelle finie est non nul.

10. **Dispositif** de détection cohérente selon l'une des revendications 3 à 9, où le générateur de motif (GEM) est connecté au calculateur (PEI), et sélectionne pour le motif de modulation une forme d'impulsion maximisant le taux de performance.

11. **Dispositif** de détection cohérente selon l'une des revendications précédentes, où les impulsions répétitives du motif de modulation ont une forme de pic à proximité de la limite entre chaque temps symbole du signal utile.

12. **Dispositif** de détection cohérente selon l'une des revendications précédentes, où les impulsions répétitives du motif de modulation ont une forme de creux à proximité de la limite entre chaque temps symbole du signal utile.

13. **Procédé de détection cohérente** de données transportées dans un signal optique dit signal utile entrant, comprenant :
- moduler (E1) un signal optique de fréquence optique sensiblement égale à celle du signal utile entrant, dit signal d'oscillation, avec un motif de modulation comprenant des impulsions répétitives de même intervalle et de même alignement temporel que le temps symbole du signal utile entrant,
- mélanger (E2) le signal utile entrant et le signal d'oscillation modulé, l'un des deux signaux étant séparé en deux signaux de polarisations orthogonales, et où l'autre des deux signaux est mélangé aux deux signaux séparés, produisant un signal mélangé,
- détecter (E3) lesdites données transportées dans le signal mélangé, à l'aide d'un détecteur.

14. **Procédé de détection cohérente** selon la revendication 13, comprenant en outre :
- récupérer (E4) une valeur du temps symbole du signal utile en fonction des données détectées, à l'aide d'un récupérateur d'horloge (CDR) connecté au détecteur.
- calculer (E5) un taux de performance du signal détecté, à partir des données détectées,
- déterminer (E4) un alignement de phase temporelle du motif de modulation maximisant le taux de performance.

15. **Procédé de détection cohérente** selon la revendication 14, comprenant en outre :
- comparer (E6) le taux de performance à un premier seuil, et si le premier seuil n'est pas atteint, modifier (E7) l'alignement de phase temporelle du motif de modulation en le décalant dans un sens ou dans l'autre.

16. **Procédé de détection cohérente** selon la revendication 15, où modifier (E7) l'alignement de phase temporelle du motif de modulation consiste à changer l'unique coefficient de pondération non nul dans un filtre à réponse impulsionnelle finie appliqué au signal d'oscillation.

17. **Procédé de détection cohérente** selon l'une des revendications 14 ou 15, comprenant en outre :
- comparer (E6b) le taux de performance à un second seuil, et si le second seuil n'est pas atteint, modifier (E7b) le motif de modulation du signal d'oscillation.

## Patentansprüche

1. Vorrichtung zur kohärenten Detektion von Daten, die in einem optischen Signal, als Eingangsnutzsignal bezeichnet, transportiert werden, wobei die Vorrichtung Folgendes beinhaltet:
- eine erste optische Eingangs-Einmodenfaser (PLSOF), die dazu konfiguriert ist, das Eingangsnutzsignal in einen Signalmischer (MEL) einzuspeisen,
- eine zweite optische Eingangs-Einmodenfaser (LOSOF), die dazu konfiguriert ist, ein optisches Signal mit einer optischen Frequenz, die im Wesentlichen gleich der des Eingangsnutzsignals ist, als Oszillationssignal bezeichnet, in den Signalmischer (MEL) einzuspeisen,
- den Signalmischer (MEL), der dazu konfiguriert ist, eines der Signale der ersten oder der zweiten Faser in zwei orthogonal polarisierte Signale zu trennen und das andere der Signale der ersten oder der zweiten Faser mit den zwei getrennten Signalen zu mischen, um ein gemischtes Signal zu produzieren,
- einen Detektor (DET) für die transportierten Daten, die in dem gemischten Signal vorhanden sind, wobei die Vorrichtung **dadurch gekennzeichnet ist, dass** sie ferner Folgendes beinhaltet:
- einen Amplitudenmodulator (MOD), der dazu konfiguriert ist, das Oszillationssignal vor seinem Eintritt in den Mischer zu modulieren, wobei das Modulationsmuster sich wiederholende Impulse mit gleichem Intervall und gleicher zeitlicher Ausrichtung wie eine Symbolzeit des Eingangsnutzsignals beinhaltet.

2. Vorrichtung zur kohärenten Detektion nach Anspruch 1, die ferner eine Taktrückgewinnungseinheit (CDR) beinhaltet, die mit dem Detektor verbunden ist und dazu konfiguriert ist, den Wert der Symbolzeit des Nutzsignals in Abhängigkeit von den detektierten Daten bereitzustellen.

3. Vorrichtung zur kohärenten Detektion nach Anspruch 2, die ferner Folgendes beinhaltet:
- einen Leistungsrechner (PEI), der dazu konfiguriert ist, eine Leistung des detektierten Signals anhand der detektierten Daten zu berechnen,
- einen Mustergenerator (GEM), der mit der Taktrückgewinnungseinheit verbunden ist und dazu konfiguriert ist, ein Modulationsmuster des Oszillationssignals anhand des Werts der Symbolzeit des Nutzsignals zu generieren,
- eine Ausrichteinheit für die zeitliche Phase (PTA), die mit dem Rechner (PEI) und mit dem Mustergenerator (GEM) verbunden ist und dazu konfiguriert ist, eine zeitliche Ausrichtung des Modulationsmusters zu bestimmen, die die Leistung des detektierten Signals maximiert.

4. Vorrichtung zur kohärenten Detektion nach Anspruch 3, wobei die Symbole mit 1 Bit codiert sind und wobei die durch den Leistungsrechner (PEI) berechnete Leistung von einer Bitfehlerrate abhängt.

5. Vorrichtung zur kohärenten Detektion nach Anspruch 3, wobei die Symbole mit 2 Bits oder mehr codiert sind und wobei die durch den Leistungsrechner (PEI) berechnete Leistung ein Wert ist, der für eine Qualität einer Konstellation der Symbole in dem detektierten Signal repräsentativ ist.

6. Vorrichtung zur kohärenten Detektion nach Anspruch 3, wobei die Symbole mit 2 Bits oder mehr codiert sind und wobei die durch den Leistungsrechner (PEI) berechnete Leistung ein Wert ist, der für eine Qualität eines Augendiagramms, das anhand des detektierten Signals produziert wird, repräsentativ ist.

7. Vorrichtung zur kohärenten Detektion nach Anspruch 3, wobei die durch den Leistungsrechner (PEI) berechnete Leistung ein Wert ist, der für ein Signal-RauschVerhältnis in dem detektierten Signal repräsentativ ist.

8. Vorrichtung zur kohärenten Detektion nach einem der Ansprüche 3 bis 7, wobei die Ausrichteinheit für die zeitliche Phase (PTA) ein Filter mit endlicher Impulsantwort beinhaltet.

9. Vorrichtung zur kohärenten Detektion nach Anspruch 8, wobei ein einziger Gewichtungskoeffizient des Filters mit endlicher Impulsantwort ungleich Null ist.

10. Vorrichtung zur kohärenten Detektion nach einem der Ansprüche 3 bis 9, wobei der Mustergenerator (GEM) mit dem Rechner (PEI) verbunden ist und für das Modulationsmuster eine Impulsform auswählt, die die Leistung maximiert.

11. Vorrichtung zur kohärenten Detektion nach einem der vorhergehenden Ansprüche, wobei die sich wiederholenden Impulse des Modulationsmusters in der Nähe der Grenze zwischen jeder Symbolzeit des Nutzsignals die Form einer Spitze aufweisen.

12. Vorrichtung zur kohärenten Detektion nach einem der vorhergehenden Ansprüche, wobei die sich wiederholenden Impulse des Modulationsmusters in der Nähe der Grenze zwischen jeder Symbolzeit des Nutzsignals die Form eines Tals aufweisen.

13. Verfahren zur kohärenten Detektion von Daten, die in einem optischen Signal, als Eingangsnutzsignal bezeichnet, transportiert werden, das Folgendes beinhaltet:
- Modulieren (E1) eines optischen Signals mit einer optischen Frequenz, die im Wesentlichen gleich der des Eingangsnutzsignals ist, als Oszillationssignal bezeichnet, mit einem Modulationsmuster, das sich wiederholende Impulse mit gleichem Intervall und gleicher zeitlicher Ausrichtung wie die Symbolzeit des Eingangsnutzsignals beinhaltet,
- Mischen (E2) des Eingangsnutzsignals und des modulierten Oszillationssignals, wobei eines der Signale in zwei orthogonal polarisierte Signale getrennt wird und wobei das andere der zwei Signale mit den zwei getrennten Signalen gemischt wird, um ein gemischtes Signal zu produzieren,
- Detektieren (E3) der in dem gemischten Signal transportierten Daten mit Hilfe eines Detektors.

14. Verfahren zur kohärenten Detektion nach Anspruch 13, das ferner Folgendes beinhaltet:
- Rückgewinnen (E4) eines Werts der Symbolzeit des Nutzsignals in Abhängigkeit von den detektierten Daten mit Hilfe einer Taktrückgewinnungseinheit (CDR), die mit dem Detektor verbunden ist,
- Berechnen (E5) einer Leistung des detektierten Signals anhand der detektierten Daten,
- Bestimmen (E4) einer Ausrichtung einer zeitlichen Phase des Modulationsmusters, die die Leistung maximiert.

15. Verfahren zur kohärenten Detektion nach Anspruch 14, das ferner Folgendes beinhaltet:
- Vergleichen (E6) der Leistung mit einem ersten Schwellenwert und, wenn der erste Schwellenwert nicht erreicht wird, Modifizieren (E7) der Ausrichtung einer zeitlichen Phase des Modulationsmusters, indem sie in die eine oder die andere Richtung verschoben wird.

16. Verfahren zur kohärenten Detektion nach Anspruch 15, wobei das Modifizieren (E7) der Ausrichtung einer zeitlichen Phase des Modulationsmuster darin besteht, den einzigen Gewichtungskoeffizienten ungleich Null in einem Filter mit endlicher Impulsantwort, der auf das Oszillationssignal angewendet wird, zu ändern.

17. Verfahren zur kohärenten Detektion nach einem der Ansprüche 14 oder 15, das ferner Folgendes beinhaltet:
- Vergleichen (E6b) der Leistung mit einem zweiten Schwellenwert und, wenn der zweite Schwellenwert nicht erreicht wird, Modifizieren (E7b) des Modulationsmusters des Oszillationssignals.

## Claims

1. Device for coherent detection of data transported in an optical signal called the input payload signal, the device comprising:
- a first input single-mode optical fibre (PLSOF), which is configured to inject the input payload signal into a signal mixer (MEL),
- a second input single-mode optical fibre (LOSOF), which is configured to inject an optical signal of optical frequency substantially equal to that of the input payload signal, which optical signal is called the oscillation signal, into the signal mixer (MEL),
- the signal mixer (MEL), which is configured to split one of the signals of the first or of the second fibre into two signals of orthogonal polarizations, and to mix the other of the signals of the first or of the second fibre with the two split signals, producing a mixed signal,
- a detector (DET) of said transported data present in the mixed signal, the device being **characterized in that** it further comprises:
- an amplitude modulator (MOD) configured to modulate the oscillation signal before it enters the mixer, the modulation pattern comprising repetitive pulses of same interval and of same temporal alignment as a symbol time of the input payload signal.

2. Device for coherent detection according to Claim 1, further comprising a clock recoverer (CDR) connected to the detector and configured to deliver the value of the symbol time of the payload signal depending on the detected data.

3. Device for coherent detection according to Claim 2, further comprising
- a performance computer (PEI) configured to compute a performance level of the detected signal, on the basis of the detected data,
- a pattern generator (GEM), which is connected to the clock recoverer and configured to generate a modulation pattern of the oscillation signal on the basis of the value of the symbol time of the payload signal,
- a temporal-phase aligner (PTA), which is connected to the computer (PEI) and to the pattern generator (GEM), and configured to determine an alignment of the modulation pattern in time that maximizes the performance level of the detected signal.

4. Device for coherent detection according to Claim 3, wherein the symbols are encoded on 1 bit and wherein the performance level computed by the performance computer (PEI) is a function of a bit error rate.

5. Device for coherent detection according to Claim 3, wherein the symbols are encoded on 2 or more bits, and wherein the performance level computed by the performance computer (PEI) is a value representative of a quality of a constellation of the symbols in the detected signal.

6. Device for coherent detection according to Claim 3, wherein the symbols are encoded on 2 or more bits, and wherein the performance level computed by the performance computer (PEI) is a value representative of a quality of an eye diagram produced on the basis of the detected signal.

7. Device for coherent detection according to Claim 3, wherein the performance level computed by the performance computer (PEI) is a value representative of a signal-to-noise ratio in the detected signal.

8. Device for coherent detection according to one of Claims 3 to 7, wherein the temporal-phase aligner (PTA) comprises a finite impulse response filter.

9. Device for coherent detection according to Claim 8, wherein a single weighting coefficient of the finite impulse response filter is non-zero.

10. Device for coherent detection according to one of Claims 3 to 9, wherein the pattern generator (GEM) is connected to the computer (PEI), and selects, for the modulation pattern, a pulse shape that maximizes the performance level.

11. Device for coherent detection according to one of the preceding claims, wherein the repetitive pulses of the modulation pattern have a peak shape in proximity to the limit between each symbol time of the payload signal.

12. Device for coherent detection according to one of the preceding claims, wherein the repetitive pulses of the modulation pattern have a valley shape in proximity to the limit between each symbol time of the payload signal.

13. Method for coherent detection of data transported in an optical signal called the input payload signal, comprising:
- modulating (E1) an optical signal of optical frequency substantially equal to that of the input payload signal, which optical signal is called the oscillation signal, with a modulation pattern comprising repetitive pulses of same interval and of same temporal alignment as the symbol time of the input payload signal,
- mixing (E2) the input payload signal and the modulated oscillation signal, one of the two signals being split into two signals of orthogonal polarizations, and the other of the two signals being mixed with the two split signals, producing a mixed signal,
- detecting (E3) said data transported in the mixed signal, using a detector.

14. Method for coherent detection according to Claim 13, further comprising:
- recovering (E4) a value of the symbol time of the payload signal depending on the detected data, using a clock recoverer (CDR) connected to the detector,
- computing (E5) a performance level of the detected signal, on the basis of the detected data,
- determining (E4) a temporal-phase alignment of the modulation pattern that maximizes the performance level.

15. Method for coherent detection according to Claim 14, further comprising:
- comparing (E6) the performance level to a first threshold, and if the first threshold is not reached, modifying (E7) the temporal-phase alignment of the modulation pattern by shifting it in one direction or the other.

16. Method for coherent detection according to Claim 15, wherein modifying (E7) the temporal-phase alignment of the modulation pattern consists in changing the single non-zero weighting coefficient in a finite impulse response filter applied to the oscillation signal.

17. Method for coherent detection according to either of Claims 14 and 15, further comprising:
- comparing (E6b) the performance level to a second threshold, and if the second threshold is not reached, modifying (E7b) the modulation pattern of the oscillation signal.
